# EUROPEAN PATENT APPLICATION

(11) **EP 1 722 566 A1**
(43) Date of publication of application: **15.11.2006**
(21) Application number: 05710646.0
(22) Date of filing: 24.02.2005
(51) Int. Cl.: H04N 7/173, G06F 12/00, H04L 29/02

(54) **INFORMATION DISTRIBUTING SYSTEM AND METHOD, INFORMATION DISTRIBUTING APPARATUS THEREFOR, RECEIVER TERMINAL, AND INFORMATION RELAYING APPARATUS**

(30) Priority: 24.02.2004 JP 2004047875
(71) Applicant: NEC CORPORATION, Minato-ku, Tokyo 108-0014 (JP)
(72) Inventor: Kimoto, Takahiro, Tokyo 1080014 (JP)
(74) Representative: Vossius & Partner
(86) International application number: PCT/JP2005/002995
(87) International publication number: WO 2005/081528

(57) **Abstract**

In an information delivery system for delivering a program formed of an image, voice or data to a receiving terminal, suitable delivery without a delay before reproduction is always implemented in different utilization environments.

When information 1000 for restricting a candidate program which becomes a subject of service is input to a receiving terminal 10, a transmitter 20 delivers a head sequence data group 1004 of a sequence included in the candidate program to the receiving terminal 10 in a non-real time manner. The receiving terminal 10 stores the head sequence group in a storage 100. When a user inputs information 1100 for selecting a reproduction sequence to be actually viewed from the candidate program, the transmitter delivers following sequence data 1202 of the reproduction sequence to the receiving terminal in real time. Until the following sequence data becomes reproducible, the receiving terminal reproduces and displays head sequence data stored in the storage 100. Thereafter, the receiving terminal changes over to reproduction and display of the following sequence data.

## Description

### Technical Field

The present invention relates to an information delivery system for delivering image, voice and data according to a user's request. In particular, the present invention relates to an information delivery system for conducting real time delivery to receiving terminals having different connection environments or reproduction performances, and transmitting devices and receiving terminals forming the information delivery system.

### Background Art

In recent years, information delivery service for delivering image, voice and data via a network is spread over receiving terminals having various connection environments and reproduction performances. As for the connection environments, wire Ethernet (registered trademark of XEROX Corporation), public switching networks for wire telephone or mobile telephone, wireless connection techniques, cable transmission, and satellite and ground wave digital broadcast can be mentioned. As terminals having different reproduction performances, there are personal computers used in homes, notebook computers, terminals connected to television, mobile information terminals called PDA (personal digital assistance), and mobile telephone terminals. The server delivers an image signal and a voice signal compressed and encoded at a bit rate and with a resolution suitable for the connection environment and reproduction performance to each terminal in a data form suitable for the environment of the terminal.

In the current information delivery service, the server completely manages environments and delivery timing of terminals with respect to individual programs to be delivered. Each receiving terminal conducts authentication processing with the server, and then notifies the server of the connection environment and reproduction performance. The server conducts information delivery in a data form suitable for the environment of the terminal. Whenever a viewer is connected to the server, a delay occurs since a program to be delivered is requested until the program is actually reproduced.

On the other hand, the viewing environment is diversified. As the number of programs increases, the viewing form of the user is also changing. Three concrete examples will now be mentioned. In a first concrete example, the viewer confirms a program group suiting the viewer's taste by conducting information retrieval on the network, and views the program group. The first concrete example is a form in which the viewer freely views programs restricted so as to suit the viewer's taste. In a second concrete example, contents delivered in a specific channel during a specific time period are stored in a home computer or a terminal casing in home, and the viewer views the stored contents from the outdoors via a mobile terminal or the like. The second concrete example is a form in which the viewer freely views programs delivered within restrictions to specific time period and area. In a third concrete example, the viewer views programs intended for education specified by a corporation or school, on the viewer's terminal. The third concrete example is a form in which the viewer freely views programs restricted to a community to which the viewer belongs.

What are common to these concrete examples are that processing of restricting, in a stage prior to actual program viewing, a candidate program group, i.e., a set of programs which might be reproduced consecutively by the viewer at opportunity of viewing obtained once, is conducted, that the restriction processing and actual program viewing are not always conducted consecutively, and that the viewer desires reproduction of the restricted candidate program group without a delay in an arbitrary connection environment and reproduction environment. Especially as regards the third common point, it is considered that the user's requirement for reproduction without discrimination from data stored in a local medium such as an incorporated hard disk or storage is great. If all programs in the candidate program group are stored in the storage in the terminal, the requirement can be satisfied. Since the capacity of the storage that can be used in the terminal is typically limited, however, it becomes impossible to implement if the number of candidate program groups increases.

There is a method for conducting consecutive reproduction without making the viewer conscious of the reproduction delay by previously delivering data to be reproduced from the server at the time of delay occurrence (for example, see Patent Document 1).

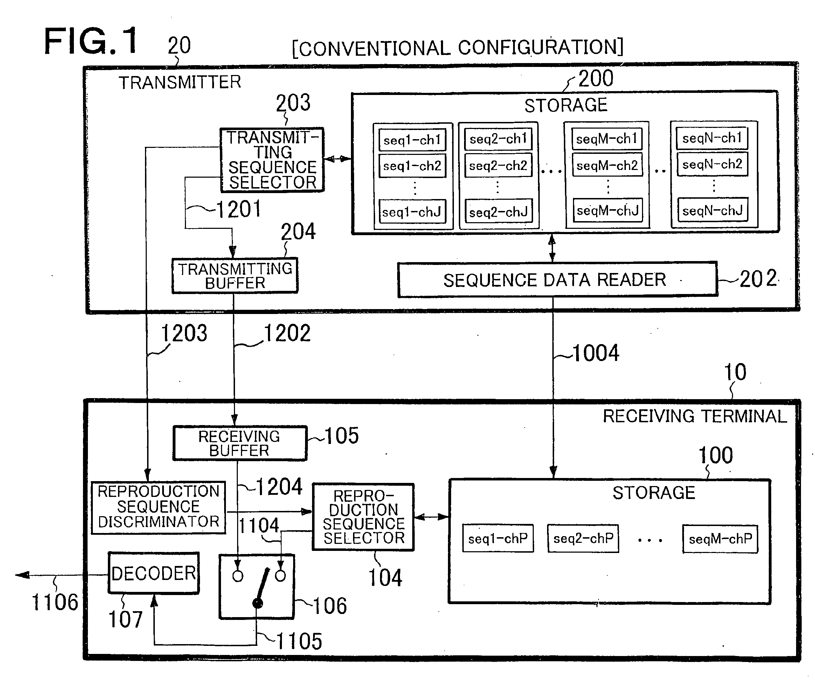

FIG. 1 is a configuration diagram of a conventional information delivery system. The technique of conducting the consecutive reproduction will now be described with reference to FIG. 1. First, a transmitter 20 previously delivers sequence data 1004 that is scheduled to be reproduced when a reproduction delay occurs, to a receiving terminal 10. The sequence data 1004 has a data form suitable for the connection environment and reproduction environment of the receiving terminal 10. The sequence data 1004 is stored in a storage 100 in the receiving terminal 10. At the time of delivery service, a transmitting sequence selector 203 in the transmitter 20 reads sequence data 1201 to be delivered subsequently from a storage 200, and transmits the sequence data 1201 to the receiving terminal 10 via a transmitting buffer 204. Prior to this, the transmitting sequence selector 203 notifies the receiving terminal 10 of identification information 1203 of sequence data to be reproduced from among sequence data stored in the storage 100 within a delay time at the time of delivery. A reproduction sequence selector 104 reads out sequence data corresponding to the sequence data identification information 1203 from the storage 100, and sends the sequence data to a switcher 106. The switcher 106 outputs sequence data 1104 read out from the storage 100 by the reproduction sequence selector 104 to a decoder until data is delivered from the transmitter 10. If a receiving buffer 105 outputs sequence data 1204, the switcher 106 outputs the data to the decoder.

The conventional method aims at conducting reproduction consecutively in a predetermined order of contents at predetermined changeover timing. All data previously stored in the storage 100 are specified by the transmitter.

Furthermore, there is disclosed a method for storing stream data in servers disposed in a hierarchical manner and delivering the stream data to a client via a network, in which head portion data of stream data requested by the client is cached to a server closest to the client and a quantity of head portion data stored in a downstream server is set equal to a data quantity that makes it possible to continue reproduction during at least a time period of transfer from an upstream server (see, for example, Patent Document 2).
Patent Document 1: JP 2002-344399 A
Patent Document 2: JP 2003-167813 A

### Disclosure of the Invention

### Problem to be Solved by the Invention

In the conventional art, however, reproduction changeover from a program to another program or reproduction changeover from a sequence to another sequence in a program is managed by the server. Furthermore, the pre-reading processing is specialized in a single reproduction environment. Whenever delivery service is received in different receiving terminals or whenever the reproduction environment differs, it is necessary for the user to store sequence data in the terminal. A different terminal cannot utilize sequence data stored in a certain terminal. In other words, in the conventional art, the user can reproduce programs consecutively without waiting, only in the case where the program to be changed over to subsequently and the reproduction environment are restricted. The user can not implement the way of use such that the user changes over reproduction with respect to the candidate program group in an arbitrary reproduction environment at arbitrary timing as if the user carries programs freely.

Therefore, an object of the present invention is to provide an information delivery system, and method, for delivering a program formed of an image, voice or data to a receiving terminal wherein suitable delivery without a delay before reproduction in different utilization environments can be always implemented, its information delivery apparatus, receiving terminal, and information relay apparatus.

### Means for Solving the Problem

In order to solve the problem, the present invention provides an information delivery system for causing a receiving terminal to conduct pre-reading processing prior to data reproduction processing, select suitable data from a candidate program head data group in a received data storage and reproduce the selected data at time of reproduction, and change over reproduction data at time when following data is delivered from a transmitter, wherein the receiving terminal includes a candidate program determiner for transmitting candidate program request information to the transmitter, and means for receiving the candidate program head data group from the transmitter and storing the candidate program head data group in the received data storage, a request transmitter for transmitting a sequence transmission request to the transmitter to specify a sequence to be reproduced and outputting identification information of the sequence to be reproduced, a reproduction sequence selector for reading out head sequence data of a sequence requested to be reproduced, from the received data storage, means for receiving following sequence data from the transmitter, a switcher for changing over between the head sequence data and the following sequence data, and a decoder for reproducing sequence data supplied from the switcher, and the transmitter includes a candidate program head data reader responsive to reception of the candidate program request information from the receiving terminal, for reading out a candidate program head data group from the transmission data storage and transmitting the candidate program head data group to the receiving terminal, and a transmitting sequence selector for receiving the sequence transmission request from the receiving terminal, reading out a following portion of the head sequence data included in sequence data of the sequence requested to be reproduced, from a transmission data storage, and delivering the following sequence data to the receiving terminal.

Among them, the head sequence data is characterized in that it is data of a head scene corresponding to a predetermined time of a sequence to be reproduced. Or the head sequence data is characterized in that it is data having a length corresponding to a reproduction delay since the receiving terminal requests production until the transmitter delivers the following sequence and the reproduction is started. Or the head sequence data is characterized in that it is data having a length obtained by adding a predetermined non-delivery time to a reproduction delay since the receiving terminal requests production until the transmitter delivers the following sequence and the reproduction is started, and if the receiving terminal conducts reproduction of another sequence within the non-delivery time after the reproduction of head sequence data is started, delivery of following sequence data from the transmitter is not conducted.

In addition, the information delivery system according to the present invention is characterized in that the head sequence data contains management data for managing the delivery service therein and following sequence data is prescribed by the management data during reproduction of the head sequence data. Furthermore, the information delivery system according to the present invention is characterized in that reproduction of following sequence data is restricted according to the reproduction situation of head sequence data in the receiving terminal. Or the information delivery system according to the present invention is characterized in that a delivery environment of following sequence data is prescribed according to the reproduction situation of head sequence data in the receiving terminal.

Furthermore, the information delivery system according to the present invention is characterized in that the receiving terminal stores head sequence data respectively of a plurality of sequence data that might be delivered by the transmitter in the storage, requests a reproduction sequence from the transmitter, and reproduces head sequence data corresponding to the reproduction sequence. In particular, the information delivery system according to the present invention has sequence data corresponding to special reproduction such as fast forwarding reproduction reproduction, slow motion reproduction or rewinding reproduction besides sequence data for ordinary reproduction of a certain sequence, as head sequence data delivered by the transmitter.

Or the information delivery system according to the present invention is characterized in that the receiving terminal stores head sequence data having optimum data formats respectively for a plurality of reproduction environments in the storage and reproduces head sequence data optimum for a reproduction environment at the time when the receiving terminal requests a reproduction sequence from the transmitter. As the reproduction environment, the situation of connection to the transmitter, the arithmetic operation capability of the receiving terminal, and the reproduction quality in the receiving terminal are taken into consideration.

On the other hand, the information delivery system according to the present invention is characterized in that while the receiving terminal is reproducing head sequence data, the transmitter selects sequence data requested by the receiving terminal from a sequence which becomes the delivery subject and begins to deliver the sequence data as following sequence data. Or the information delivery system according to the present invention is characterized in that while the receiving terminal is reproducing head sequence data, the transmitter processes the sequence requested by the receiving terminal to provide it with a data format most suitable for the reproduction environment of the receiving terminal and begins to deliver a resultant sequence. In particular, the information delivery system according to the present invention is characterized in that the transmitter stores sequence data in the storage in data formats respectively corresponding to a plurality of reproduction environments of the receiving terminal and delivers sequence data having a data format most suitable for the reproduction environment of the receiving terminal at the time when the receiving terminal reproduces the sequence, or the transmitter converts sequence data into a data format most suitable for the reproduction environment of the receiving terminal and delivers resultant sequence data at the time when the receiving terminal reproduces the sequence.

### Effects of the Invention

According to the present invention, delivery that is always suitable in different reproduction environments without causing the user to feel the reproduction delay, by requesting the transmitter to deliver a sequence during reproduction of head sequence data stored in the storage and, upon reception of following sequence data, changing over reproduction to the sequence data.

In the delivery service, it is considered that the user restricts programs the user views simultaneously at one viewing opportunity and then views freely these candidate programs. According to the present invention, the receiving terminal itself or the relay apparatus connected to the receiving terminal without congestion has head sequence data for candidate programs, and consequently the user can view all sequences in the candidate programs always in a suitable condition without delay. The head data stored in the storage in the receiving terminal is extremely minute as compared with the whole sequence data. According to the present invention, it is possible to handle far more candidate programs as compared with the case where all sequence data of candidate programs are stored in the storage in the receiving terminal, and in addition reproduction without a sense of incompatibility is possible.

Furthermore, according to the present invention, delivery service can be implemented without causing the user to feel burden, by conducting a procedure required at the time of program delivery, such as authentication of the user, using management data contained in the head sequence data at the time of reproduction of head sequence data, or conducting program delivery on condition that head sequence data is reproduced.

### Brief Description of the Drawings

FIG. 1 is a block diagram showing a configuration according to a conventional art;
FIG. 2 is a block diagram showing a configuration of a first embodiment according to the present invention;
FIG. 3 is a flow chart showing a flow of pre-reading processing in a receiving terminal;
FIG. 4 is a flow chart showing a flow of processing in a transmitter at the time of pre-reading processing;
FIG. 5 is a flow chart showing a flow of reproduction processing in a receiving terminal;
FIG. 6 is a flow chart showing a flow of processing in a transmitter at time of reproduction processing;
FIG. 7 is a concept diagram showing a configuration of head data corresponding to fast reproduction; and
FIG. 8 is a block diagram showing a configuration of a second embodiment according to the present invention.

### Description of Reference Numerals

- 10, 11:: Receiving terminal
- 20, 21:: Transmitter
- 31:: Relay apparatus
- 100, 101, 108, 200, 300, 301:: Storage
- 102, 302:: Candidate program determiner
- 103, 303:: Request transmitter
- 104, 304:: Reproduction sequence selector
- 105:: Receiving buffer
- 106, 305:: Switcher
- 107:: Decoder
- 201:: Candidate program head data reader
- 203:: Transmitting sequence selector
- 204:: Transmitting buffer
- 1000, 1300:: Candidate program information
- 1003:: Candidate program request information
- 1004, 1005:: Candidate program head data group
- 1100, 1301:: Reproduction sequence selection information
- 1101, 1302:: Environment information.
- 1102, 1103, 1303:: Sequence transmission request
- 1104, 1107, 1305:: Head sequence data
- 1105:: Sequence data
- 1106:: Output image
- 1201, 1202, 1304:: Following sequence data

### Best Mode for Carrying Out the Invention

The best mode for carrying out the invention will now be described with reference to the drawings.

### (First Embodiment)

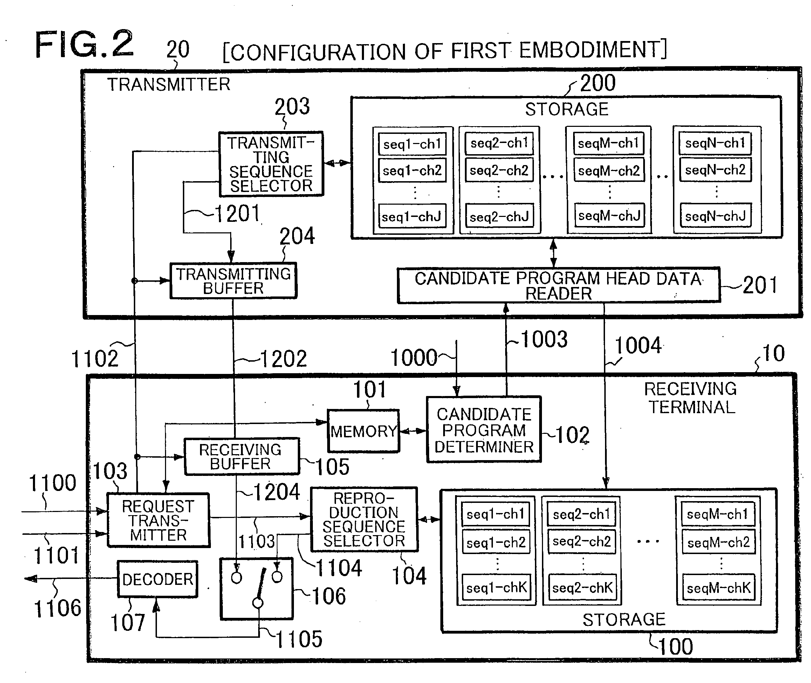

FIG. 2 is a block diagram showing a configuration of a first embodiment of an information delivery system according to the present invention. A receiving terminal 10 implementing the present invention includes storages 100 and 101, a candidate program determiner 102, a request transmitter 103, a reproduction sequence selector 104, a receiving buffer 105, a switcher 106, and a decoder 107. A transmitter 20 includes a storage 200, a candidate program head data reader 201, a transmitting sequence selector 203, and a transmitting buffer 204.

Operation implementing the present invention includes reproduction processing and pre-reading processing conducted prior to the reproduction processing. The pre-reading processing is conducted by the candidate program determiner 102 and the candidate program head data reader 201. The pre-reading processing is processing of previously storing head data corresponding to several seconds of a candidate program that might be reproduced in an arbitrary environment, in the storage 100 in the receiving terminal 10. The reproduction processing is conducted by the request transmitter 103, the reproduction sequence selector 104, the receiving buffer 105, the switcher 106, the decoder 107, the transmitting sequence selector 203, and the transmitting buffer 204. In the reproduction processing, the receiving terminal 10 selects one sequence from the candidate programs and issues a delivery request to the transmitter 20, and data delivered from the transmitter 20 is reproduced in real time.

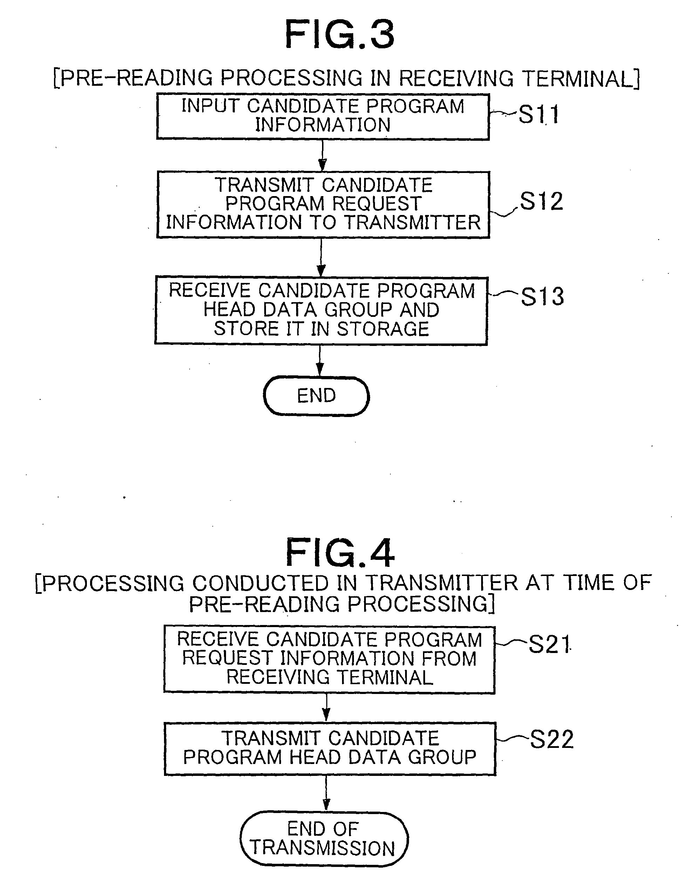

First, the pre-reading processing will be described in further detail. FIG. 3 is a flow chart showing a flow of pre-reading processing in the receiving terminal. The receiving terminal 10 receives candidate program information 1000 as its input (step 11). The candidate programs are a part of all programs formed of images, voices or data which become service subjects, and the candidate programs mean a set of programs that might be reproduced arbitrarily by the user at a single opportunity. Specifically, a result of program selection conducted by the user on the basis of a result of retrieval or the like and the user's taste, a program group specified by a community to which the user belongs, and a program group restricted to a specific time range or channel are conceivable. The storage 101 retains identification information of all programs. The candidate program determiner 102 refers to the storage 101, and transmits candidate program request information 1003 to the transmitter 20 (step 12).

The candidate program request information 1003 is formed of a combination of identification information and a reproduction environment in which the user can view a candidate program. Here, the reproduction environment means one of or a combination of a plurality of environments concerning a situation of connection between the receiving terminal and the transmitter, arithmetic operation capability which can be utilized by the receiving terminal, and the reproduction quality. The connection situation represents a connection method kind, such as the wired Internet connection or a modulation technique at the time of wireless communication, a bandwidth based on the connection method kind, a transmission error occurrence frequency, and a fluctuation of the transmission delay. The environment concerning the reproduction quality represents a resolution and the number of simultaneously emitted colors, or a capability of a speaker.

FIG. 4 is a flow chart showing a flow of pre-reading processing in the transmitter. Upon receiving the candidate program request information 1003 (step 21), the candidate program head data reader 201 reads a head data group of a candidate program from the storage 200 and transmits it to the receiving terminal 10 (step 22). Each program is formed of a plurality of sequences forming each scene. An individual sequence is stored in a plurality of data formats respectively suited for serviceable reproduction environments. Supposing that the total number of sequences is N for all programs that can be handled by the transmitter 20 and an individual sequence is formed in J data formats, J x N sequence data are stored in the storage 200. Supposing that the total number of sequences forming a candidate program is M and the total number of combinations of reproduction environments that can be utilized by the user is K, the number of read head data groups becomes K x M. The quantity of data read out as head data, i.e., the reproduction time of the head data is set equal to time corresponding to a delay required since the receiving terminal issues a delivery request to the transmitter until reproduction is actually conducted. Especially in the case where the maximum delay time is ensured, reproduction of sequences without an interruption can be implemented with storage of minimum head data by setting the reproduction time of head data equal to the maximum delay time.

Returning back to FIG. 3, a continuation of the pre-reading processing conducted in the receiving terminal will now be described. The receiving terminal 10 receives a candidate program head data group and stores it into the storage 100 (step 13).

The pre-reading processing heretofore described is conducted prior to the reproduction processing. At the time when the reproduction processing is conducted, head data groups of all candidate programs are stored in the storage 100. At the time of reproduction, suitable data are selected from the candidate program head data and reproduced and displayed. At the time when data is delivered from the transmitter 20, display is changed over.

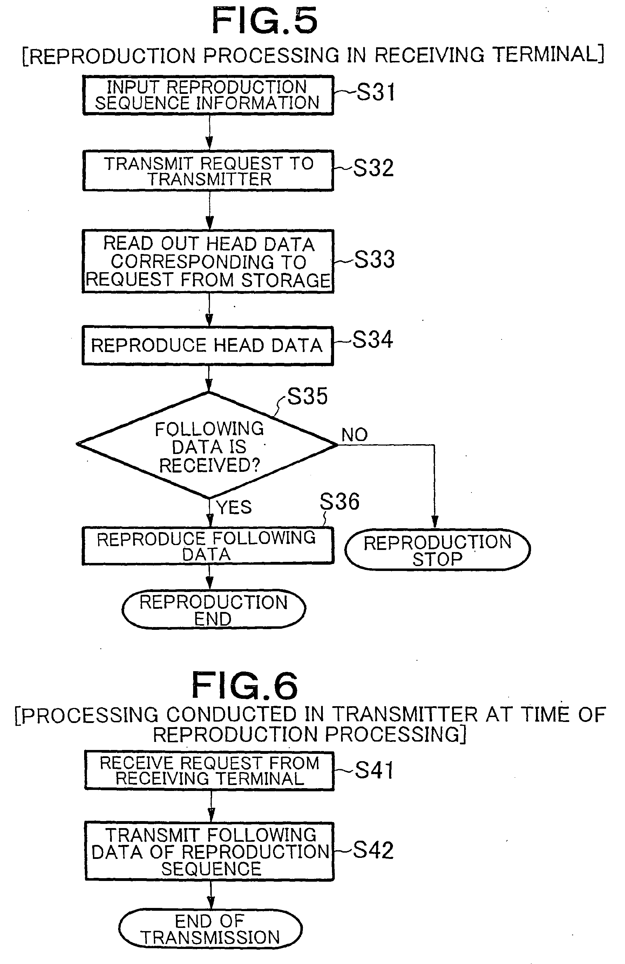

Hereafter, the reproduction processing will be described in further detail. FIG. 5 is a flow chart showing a flow of the reproduction processing in the receiving terminal. The user inputs reproduction sequence selection information 1100 to the receiving terminal 10 to specify a sequence of a program included in the candidate programs (step 31). The request transmitter 103 transmits a sequence transmission request 1102, which includes identification information of the candidate program stored in the storage 101, identification information of the sequence, and environment information 1101 concerning the current reproduction environment, to the transmitter 20 (step 32). Furthermore, the receiving buffer 105 in the receiving terminal 10 and the transmitting buffer 204 in the transmitter 20 are notified of the sequence transmission request 1102. These buffers are initialized at timing when sequence data corresponding to the sequence transmission request 1102 is delivered.

Furthermore, the request transmitter 103 transmits identification information 1103 of the sequence to be reproduced to the reproduction sequence selector 104. The reproduction sequence selector 104 reads out head sequence data 1104 that is requested to be reproduced by the user and that has a data format most suitable for the current reproduction environment from the storage 100, and sends the head sequence data 1104 to the switcher 106 (step 33). The switcher 106 sends head sequence data to the decoder 107 until the switcher 106 receives following data of the sequence delivered from the transmitter 20 and requested to be reproduced by the user. The decoder 107 decodes sequence data 1105 output from the switcher 106, and generates an output image 1106 (step 34).

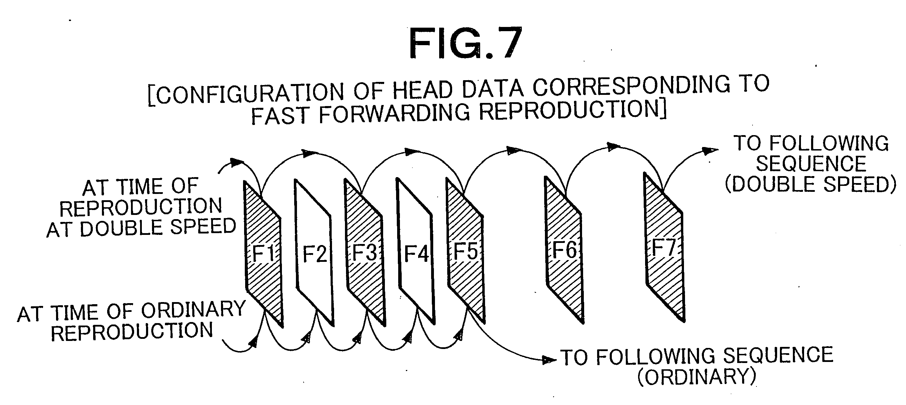

FIG. 6 is a flow chart showing a flow of processing conducted in the transmitter at the time of reproduction processing. In the transmitter 20, the transmitting sequence selector 203 receives the sequence transmission request 1102 (step 41). The transmitting sequence selector 203 reads out a following portion of head sequence data previously sent to the receiving terminal 10 included in data of a sequence that is requested to be reproduced by the user and that has a data format most suitable for the current reproduction environment, from the storage 200. The following sequence data 1201 is delivered to the receiving terminal 10 while being buffering in the transmitting buffer 204 (step 42).

Returning back to FIG. 5, a continuation of reproduction processing in the receiving terminal will be described. The receiving buffer 105 sends following sequence data 1202 to the switcher 106 while buffering it. Upon receiving data from the receiving buffer 105 (step 35), the switcher 106 changes over the sequence data 1105 input to the decoder 107 to the data, and reproduces the following sequence data (step 36).

The receiving terminal 10 can reproduce an arbitrary sequence in an arbitrary candidate program without a wait by changing over between the head sequence data stored in the storage 100 and the following sequence data delivered from the transmitter 20. Furthermore, even in the case where the reproduction environment is different, the receiving terminal 100 selects suitable data from the head sequence data stored in the storage 100 and reproduces the suitable data, and receives suitable following sequence data from the transmitter 20 during that time. As a result, it is possible to implement reproduction of an arbitrary sequence of a candidate program that is considered to be viewed by the user at one viewing opportunity, always in a suitable state without causing a delay.

By the way, the storages 100 and 101 included in the receiving terminal 10 and the storage 200 included in the transmitter 20 are external storages which can be read and written via an internal storage or a network. In addition, as the storages 100 and 101 included in the receiving terminal 10, storage media that can be freely detached are included. In the case where head sequence data stored via another receiving terminal is coupled to the storage 100 in the receiving terminal 10, the transmitter 20 does not transmit head sequence data. The user can implement reproduction in an always suitable state in a receiving terminal in an arbitrary environment by connecting the portable storage 100.

Furthermore, the present invention can also be applied to the case where the transmitter previously stores sequence data for one sequence in the storage 200 in one or more data formats, and upon receiving the sequence transmission request 1102, the transmitter converts following sequence data into a data format optimum for the reproduction environment and delivers resultant following sequence data. As processing for generating sequence data optimum for the environment, there are re-encoding, rearrangement of the data structure, packet re-division, and addition of an error detection code or an error correction code. Furthermore, in the case where sequence data is scalable encoded, it is possible to generate sequence data differing in bit rate, spatial resolution, time resolution and sampling rate by cutting out a part of data in a suitable position.

Furthermore, in the present invention, it also becomes possible to implement an information delivery system capable of changing over between ordinary reproduction and fast forwarding reproduction without a wait by using sequence data skipped in frames so as to provide a fast fed image when reproduced, together for an individual sequence data included in a program. In this case, a flag for specifying the fast forwarding reproduction is further contained in the sequence transmission request 1102. The transmitting sequence selector 203 reads data intermittently from sequence data specified by the sequence transmission request 1102, while skipping frames in accordance with the fast forwarding reproduction rate, and outputs the data to the transmitting buffer. The reproduction sequence selector 104 reads out data of a frame required for fast forwarding reproduction from head sequence data stored in the storage 100, in accordance with a request from the request transmitter.

FIG. 7 is a concept diagram showing a configuration of head sequence data corresponding to the fast forwarding reproduction. Head sequence data stored in the storage 100 takes a form in which data of frames required for ordinary reproduction such as frames F1 to F5 shown in FIG. 7 are followed by data of frames required for fast forwarding reproduction such as frames F6 and F7 shown in FIG. 7. At the time of ordinary reproduction, data of the frames F1, F2, F3, F4 and F5 are successively decoded and reproduced, and then following sequence data delivered from the transmitter are reproduced. At the time of fast forwarding reproduction, data of the frames F1, F3, F5, F6 and F7 are successively decoded and reproduced, and then following sequence data for fast forwarding reproduction delivered from the transmitter is reproduced. Furthermore, as another configuration of a sequence that makes the fast forwarding reproduction possible, a method, such as preparing different sequence data, or cutting out a part of a data sequence in scalable-encoded sequence data and reproducing it, is also possible. As for other special reproductions such as slow motion reproduction or reverse reproduction as well, changeover in reproduction scheme can be conducted without delay by causing the receiving terminal to retain the corresponding head sequence data.

In addition, in the present invention, it becomes possible to prevent delivery processing from being conducted unnecessarily when reproduction contents are changed over in a short time, by setting reproduction time length of candidate program head data equal to a time longer than a maximum reproduction delay time depending upon the reproduction performance. A difference between the reproduction time length of the candidate program head data and the maximum reproduction delay time is referred to as non-delivery time. In the same way as consecutive changeover of channels on a TV set in a short time, following sequence data is not delivered from the transmitter if the user requests reproduction of the next sequence during the non-delivery time.

In the first embodiment, there is mentioned the situation where reproduction without delay is implemented in an arbitrary reproduction environment by causing the receiving terminal to retain head sequence data in each reproduction environment in the storage when changing over the data format according to the different reproduction environment and delivering the sequence data. The present invention can be applied to all cases where sequences delivered by the transmitter are restricted according to the receiving terminal. Specifically, as restrictions for sequences, there are service provisions according to narrowing down of sequence genres, user's authentication, or reproduced advertisements.

Upon being requested to deliver a reproduction sequence from among programs that can be delivered, the receiving terminal reproduces head sequence data corresponding to a reproduction sequence stored in the storage. The head sequence data has management data therein. Upon reproducing the head sequence data, the receiving terminal transmits the management data to the transmitter. As a result, authentication of the user is conducted, and it is determined whether following sequence data can be delivered. Or the receiving terminal conveys the arithmetic operation capability or the display capability made clear by reproduction of the head sequence data to the transmitter as information. The transmitter determines an optimum data format for the following data, and delivers the sequence data.

According to the present invention, the user can view an arbitrary sequence in the candidate program without bearing a special burden by associating processing such as authentication for the candidate program with head sequence data. Furthermore, the service provider can manage the viewing situation of the candidate program by managing the head sequence data. For example, the following service becomes possible. Once the user views head sequence data, the user can view an arbitrary sequence of the candidate program, by associating one head sequence data with one candidate program.

As the receiving terminal to which the present invention is applied, a personal computer used in home, a notebook computer, a terminal connected to a TV set, a mobile information terminal called PDA, or a mobile telephone terminal can be mentioned. A robot having a function of reproducing data delivered via a network or the like is also included.

In the present embodiment, a single transmitter conducts delivery of head sequence data at the time of pre-reading processing and delivery of following sequence data at the time of following sequence data. Also in the case where the two kinds of processing are conducted by separate transmitters, however, the present invention can be applied. A single receiving terminal conducts storage of head sequence data at the time of pre-reading processing and reproduction of following sequence data at the time of reproduction processing. Also in the case where the two kinds of processing are conducted by separate receiving terminals, however, the present invention can be applied. This is implemented by connecting a receiving terminal that conducts the pre-reading processing to a receiving terminal that conducts the reproduction processing and storing head data in the storage of the latter receiving terminal via the former receiving terminal. Or this is implemented by causing the receiving terminal that conducts the pre-reading processing to store head sequence data in a detachable storage medium and newly connecting the storage medium to the receiving terminal that conducts the reproduction processing.

### (Second Embodiment)

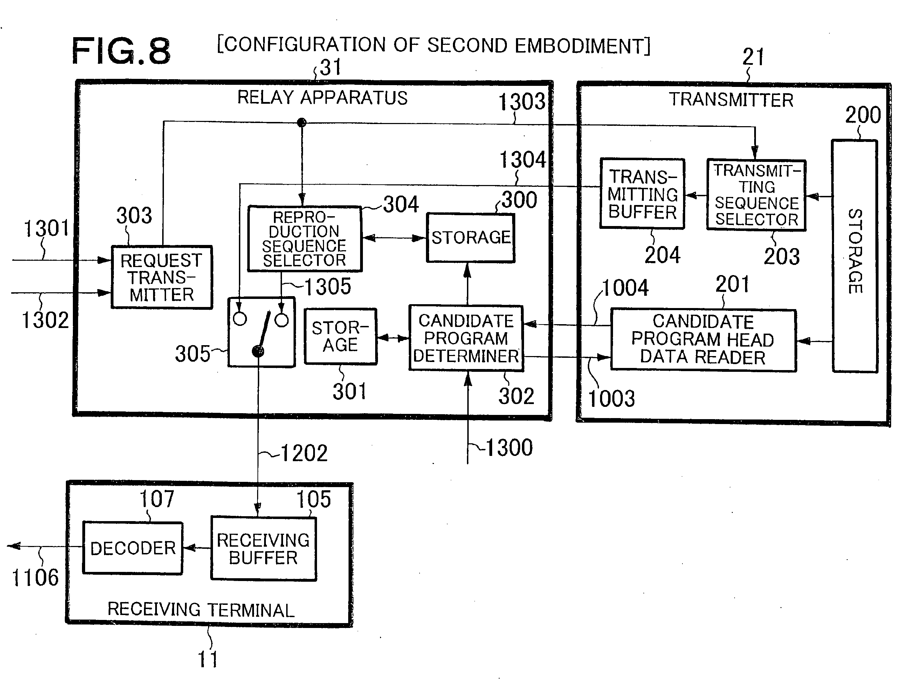

A second embodiment of the present invention will now be described. FIG. 8 is a block diagram showing a configuration of a second embodiment of an information delivery system according to the present invention. The second embodiment includes a relay apparatus 31 in addition to the receiving terminal 11 and the transmitter 21. The receiving terminal 11 for implementing the present invention includes a receiving buffer 105 and a decoder 107. The transmitter 21 includes a storage 200, a candidate program head data reader 201, a transmission sequence selector 203, and a transmitting buffer 204. The relay apparatus 31 includes storages 300 and 301, a candidate program determiner 302, a request transmitter 303, a reproduction sequence selector 304 and a switcher 305. Components in the relay apparatus 31 conduct the same processing as the storages 100 and 101, the candidate program determiner 102, the request transmitter 103, the reproduction sequence selector 104, and the switcher 106 do, respectively.

In other words, in the pre-reading processing, a candidate program head data group is stored in the storage 300. In the reproduction processing, the reproduction sequence selector reads out corresponding head sequence data from the storage 300 on the basis of a sequence transmission request 1303. The switcher 305 sends head sequence data 1305 to the receiving terminal 11. Upon receiving following sequence data 1304 from the transmitter 21, the switcher 305 changes over data delivered to the receiving terminal.

In the second embodiment, the relay apparatus 31 includes the request transmitter 303 therein. However, the second embodiment can also be applied to the case where the receiving terminal 11 includes the request transmitter in the same way as the receiving terminal shown in FIG. 2. Although the relay apparatus 31 includes the switcher 305 therein, the second embodiment can also be applied to the case where the receiving terminal 11 includes the switcher in the same way as the receiving terminal shown in FIG. 2 and the transmitter delivers following sequence data directly to the receiving terminal.

### Industrial Applicability

As a relay apparatus to which the present invention can be applied, a personal computer used in home, a terminal connected to a TV set, a network management server in home called home server or home gateway, and a relay server in a shared network represented by the Internet can be mentioned. Furthermore, a robot having a function of re-delivering data delivered via a network or the like is also included.

## Claims

1. An information delivery system for causing a receiving terminal to conduct pre-reading processing prior to data reproduction processing, select suitable data from a candidate program head data group in a received data storage and reproduce the selected data at time of reproduction, and change over reproduction data at time when following data is delivered from a transmitter,
wherein
the receiving terminal comprises:
a request transmitter for transmitting a sequence transmission request to the transmitter to specify a sequence to be reproduced and outputting identification information of the sequence to be reproduced;
a reproduction sequence selector for reading out head sequence data of a sequence requested to be reproduced, from the received data storage;
means for receiving following sequence data from the transmitter;
a switcher for changing over between the head sequence data and the following sequence data; and
a decoder for reproducing sequence data supplied from the switcher, and
the transmitter comprises:
a transmitting sequence selector for receiving the sequence transmission request from the receiving terminal, reading out a following portion of the head sequence data included in sequence data of the sequence requested to be reproduced, from a transmission data storage, and delivering the following sequence data to the receiving terminal.

2. The information delivery system according to claim 1, wherein the receiving terminal further comprises:
a candidate program determiner for transmitting candidate program request information to the transmitter; and
means for receiving the candidate program head data group from the transmitter and storing the candidate program head data group in the received data storage, and
the transmitter further comprises:
a candidate program head data reader responsive to reception of the candidate program request information from the receiving terminal, for reading out a head data group of a candidate program from the transmission data storage and transmitting the candidate program head data group to the receiving terminal.

3. The information delivery system according to claim 1 or 2, wherein
the sequence transmission request transmitted by the receiving terminal further comprises environment information concerning a current reproduction environment of the receiving terminal, and
when reading out the head sequence data from the received data storage, the reproduction sequence selector reads out the head sequence data having a data format most suitable for the current reproduction environment from the received data storage.

4. The information delivery system according to claim 1 or 2, wherein
the head sequence data further comprises management data for managing delivery service,
upon reproducing the head sequence data, the receiving terminal transmits the management data to the transmitter, and
the transmitter determines an optimum data format of following data and delivers sequence data, on the basis of received management data.

5. An information delivery method for causing a receiving terminal to conduct pre-reading processing prior to data reproduction processing, select suitable data from a candidate program head data group in a received data storage and reproduce the selected data at time of reproduction, and change over reproduction data at time when following data is delivered from a transmitter,
the information delivery method comprising the steps of:
causing the receiving terminal to transmit a sequence transmission request to the transmitter to specify a sequence to be reproduced;
causing the receiving terminal to read out head sequence data of a sequence requested to be reproduced, from the received data storage and reproduce the sequence data;
causing the transmitter to receive the sequence transmission request, read out a following portion of the head sequence data included in sequence data of the sequence requested to be reproduced, from a transmission data storage, and delivering the following sequence data to the receiving terminal;
causing the receiving terminal to receive the following sequence data and change over between the head sequence data and the following sequence data; and
reproducing the following sequence data.

6. The information delivery method according to claim 5, further comprising the steps of
causing the receiving terminal to transmit candidate program request information to the transmitter;
causing the transmitter to receive the candidate program request information, read out a head data group of a candidate program from the transmission data storage, and transmit the candidate program head data group to the receiving terminal; and
causing the receiving terminal to receive the candidate program head data group and store the candidate program head data group in the received data storage.

7. The information delivery method according to claim 5 or 6, wherein
the sequence transmission request transmitted by the receiving terminal further comprises environment information concerning a current reproduction environment of the receiving terminal, and
when reading out the head sequence data from the received data storage, reading out head sequence data having a data format most suitable for the current reproduction environment from the received data storage.

8. The information delivery method according to claim 5 or 6, wherein
the head sequence data further comprises management data for managing delivery service,
upon reproducing the head sequence data, the receiving terminal transmits the management data to the transmitter, and
the transmitter determines an optimum data format of following data and delivers sequence data, on the basis of received management data.

9. An information delivery apparatus serving as a transmitter included in an information delivery system for causing a receiving terminal to conduct pre-reading processing prior to data reproduction processing, select suitable data from a candidate program head data group in a received data storage and reproduce the selected data at time of reproduction, and change over reproduction data at time when following data is delivered from the transmitter, the information delivery apparatus comprising:
a candidate program head data reader responsive to reception of the candidate program request information from the receiving terminal, for reading out a head data group of a candidate program from the transmission data storage and transmitting the candidate program head data group to the receiving terminal; and
a transmitting sequence selector for receiving a sequence transmission request specifying a reproduction sequence in the receiving terminal from the receiving terminal, reading out a following portion of the head sequence data included in sequence data of the sequence requested to be reproduced and previously sent to the receiving terminal from a transmission data storage, and delivering the following sequence data to the receiving terminal.

10. A receiving terminal included in an information delivery system for causing the receiving terminal to conduct pre-reading processing prior to data reproduction processing, select suitable data from a candidate program head data group in a received data storage and reproduce the selected data at time of reproduction, and change over reproduction data at time when following data is delivered from the transmitter, the receiving terminal comprising:
a candidate program determiner for transmitting candidate program request information to the transmitter;
means for receiving the candidate program head data group from the transmitter and storing the candidate program head data group in the received data storage;
a request transmitter for transmitting a sequence transmission request specifying a reproduction sequence to the transmitter and outputting identification information of the sequence to be reproduced;
a reproduction sequence selector for reading out head sequence data of a sequence requested to be reproduced, from the received data storage;
means for receiving following sequence data from the transmitter;
a switcher for changing over between the head sequence data and the following sequence data; and
a decoder for reproducing sequence data supplied from the switcher.

11. An information relay apparatus included in an information delivery system for causing a receiving terminal to conduct pre-reading processing prior to data reproduction processing, select suitable data from a candidate program head data group in a received data storage and reproduce the selected data at time of reproduction, and change over reproduction data at time when following data is delivered from the transmitter, the information relay apparatus comprising:
a received data storage for storing head sequence data, the head sequence data being head data of a sequence; and
a reproduction sequence selector for receiving a sequence transmission request specifying a reproduction sequence in the receiving terminal, reading out corresponding head sequence data from the received data storage, and transmitting the corresponding head sequence data to the receiving terminal.

12. The information relay apparatus according to claim 11, further comprising a request transmitter for generating a sequence transmission request to specify a reproduction sequence in the received terminal and transmitting the sequence transmission request to the transmitter.
